# EUROPEAN PATENT APPLICATION

(11) **EP 1 146 680 A2**
(43) Date of publication of application: **17.10.2001**
(21) Application number: 01107410.1
(22) Date of filing: 26.03.2001
(51) Int. Cl.: H04J 14/02

(54) **Wavelength multiplexing system, wavelength adjusting system, and optical transmitter**

(30) Priority: 30.03.2000 JP 2000095047
(71) Applicant: NEC CORPORATION, Tokyo (JP)
(72) Inventor: Takeshita, Hitoshi, Minato-ku, Tokyo (JP); Henmi, Naoya, Minato-ku, Tokyo (JP)
(74) Representative: VOSSIUS & PARTNER

(57) **Abstract**

A wavelength multiplexing optical transmitter 100 comprises a laser driving circuit 102 for driving a multi-mode oscillation semiconductor laser 101 and an optical filter 103 for filtering an optical output from said multi-mode oscillation semiconductor laser 101. An electric signal in a desired code form is input in the wavelength multiplexing optical transmitter 100. The electric signal input into the wavelength multiplexing optical transmitter 100, after being introduced into the laser driving circuit 102 in the wavelength multiplexing optical transmitter 100, executes a direct current modulation of the multi-mode oscillation semiconductor laser 101. The multi-mode oscillation semiconductor laser 101 outputs optical signals in response to the electric current input from the laser driving circuit 102. The wavelength multiplexing optical transmitter 100 outputs a wavelength multiplexing optical signal determined by the transmitting wavelength characteristics of the optical filter 103 by filtering the wavelength of the output light from the multi-mode oscillation semiconductor laser 101.

## Description

The present invention relates to a wavelength multiplexing system and a wavelength multiplexing apparatus in a wavelength multiplexing and optical network, and in particular, relates to a wavelength multiplexing system which obtains a plurality of signal carrier wavelengths by filtering optical output from a multiple mode oscillating semiconductor laser using an optical filter, and a wavelength adjusting method and apparatus which adjust output signal carrier wavelengths by changing the center of the wavelengths output from the optical filter.

Conventionally, a wavelength multiplex system has been provided in order to cope with the demand for an increasing amount of data in data communication. The wavelength multiplexing system is comprised of a plurality of semiconductor lasers which emit single mode light beams having different wavelengths for generating a plurality of wavelength multiplexed optical signals by an optical coupler for coupling a plurality of oscillating light beams or a wavelength router through a semiconductor laser provided with a modulating function for directly modulating the oscillating light beams emitted from the plurality of semiconductor lasers or through the modulator which modulates quantity of light. Examples of semiconductor lasers which emit single mode light include DFB (Distributed Feedback laser) and DBR (Distributed Bragg Reflector laser). In addition, there is provided a semiconductor laser light source which is formed by integrating a light modulator and a DFB laser on a single substrate. There are two types of light modulators; one is the modulator utilizing an EA (Electro-Absorption) effect, in which the amount of absorbed light changes depending on the applied electric field to the p-n junction of the semiconductor, and another one is the modulator using Mach-Zehnder interferometer.

The wavelength adjustable optical transmitter is generally provided by changing the oscillating mode wavelength by accurately controlling an injection current into an wavelength adjusting semiconductor laser or by controlling the light switch after multiplexing a plurality of fixed multiple wavelengths emitted as outputs of the single mode oscillating laser through the light switch.

In addition, Japanese Unexamined Patent Application, First Publication No. Hei 9-260790 discloses a technique to stabilize the output light wavelength and the output light intensity.

However, the above-described techniques have the following problems.

The first problem is that the manufacturing cost increases in proportion to the increase of the number of the multiplexing wavelengths. The reason for this problem is that the system requires a number of semiconductor lasers and temperature control circuits equal to that the multiplexing wavelengths.

The second problem is the high driving cost. Since the temperature of the individual semiconductor laser needs to be controlled, power consumption of the control circuit becomes high.

The third problem is that high manufacturing cost of the wavelength adjusting optical transmitter, because this transmitter needs to use expensive wavelength adjusting semiconductor lasers or a plurality of single mode oscillating semiconductor lasers having a fixed oscillating wavelength.

The present invention is made to solve the above-described problems and the object of the present invention is to provide a wavelength multiplexing optical transmitter and a wavelength adjusting optical transmitter at a reduced cost and at a reduced size.

Another object is to provide is to provide a optical transmitter capable of transmitting a large volume of information by adopting the wavelength multiplexing technique at a reduced cost. The object of this light transmitting system is to generate a plurality of channels by slicing the emission spectrum of a multi-mode laser using a light filter, and to realize direct current modulation of the semiconductor laser.

In order to realize the above objectives, the first aspect of the present invention provides a wavelength multiplexing method for use in an optical network that adopts a wavelength multiplexing system comprising the steps of driving a semiconductor laser by direct current modulation in response to an input electric signal, and obtaining at least one signal carrier wavelength by dividing output wavelengths of the multi-mode oscillation semiconductor laser using an optical filter which passes at least one wavelength in said output wavelengths of said semiconductor laser.

The second aspect of the present invention provides a wavelength multiplexing optical transmitter comprising a multi-mode oscillation semiconductor laser, a laser driving circuit for driving said semiconductor laser by an input electric signal, and an optical filter having at least one passing band in an optical output from said multi-mode oscillation semiconductor laser; wherein at least one or more than one signal carrier wavelength is obtained by filtering the output of said semiconductor laser for slicing the output wavelength region of said semiconductor laser.

The third aspect of the present invention provides a wavelength adjusting apparatus using the above-described wavelength multiplexing optical transmitter in which the signal carrier wavelength is changed by changing the transmitting wavelength region of said optical filter.

That is, in the above-described wavelength adjusting apparatus, said wavelength adjusting apparatus further comprises a laser driving circuit that directly modulates the multi-mode oscillation semiconductor by an electric current and the driving circuit that converts the electric signal introduced in the driving circuit into optical signals having more than one signal carrier wavelengths, and said driving circuit changes said signal carrier wavelength by changing the transmitting wavelength region of said optical filter.

The first effect of the present invention is that multi-casting of the signals can be facilitated, since one semiconductor laser can generate a plurality of different signal carrier wavelengths and since one wavelength multiplexing optical transmitter can output a plurality of different signal carrier light beams.

The second effect of the present invention is that the present wavelength multiplexing optical transmitter can be produced at a low cost since the multi-mode oscillation semiconductor laser can be produced at a lower cost than that of the conventional single mode oscillation semiconductor laser.

The third effect of the present invention is that it is possible to provide an optical transmitter, which can be operated in a stabilized bandwidth at a low power consumption and thus at a reduced cost, since the signal carrier wavelength can be determined by the optical filter, which is a passive component, in contrast to the conventional wavelength multiplexing optical transmitter using a single mode oscillating semiconductor laser, since the signal carrier wavelength of the conventional optical transmitter is determined by the oscillating wavelength of the semiconductor laser.

The fourth effect of the present invention is that the present optical transmitter is stable in fluctuating environment because the signal carrier wavelength of the present optical transmitter is determined by the optical filter, which is a passive component, in contrast to the conventional wavelength multiplexing optical transmitter using a single mode oscillating semiconductor laser, since the signal carrier wavelength of the conventional optical transmitter is determined by the oscillating wavelength of the semiconductor laser.

The fifth effect of the present invention is that a wavelength adjusting optical transmitter can be provided at a low cost because a desired oscillating mode can be obtained by switching the output modes of the multi-mode oscillation semiconductor laser using an optical filter.

Hereinafter, the present invention is described in detail with reference to the attached drawings.

Fig. 1 is a block diagram showing the structure of the wavelength multiplexing optical transmitter of the present invention.

Fig. 2 is a diagram explaining respective blocks of the wavelength multiplexing optical transmitter of the present invention.

Fig. 3 is a block diagram showing the wavelength multiplexing optical transmitter according to the first embodiment of the present invention.

Fig. 4 is a block diagram showing the structure of the wavelength multiplexing optical transmitter according to the second embodiment of the present invention.

Fig. 5 is a block diagram showing the structure of wavelength multiplexing optical transmitter of the present invention.

Fig. 6 is a block diagram showing the structure of wavelength multiplexing optical transmitter of the present invention.

Fig. 7 is a block diagram showing the structure of wavelength multiplexing optical transmitter of the present invention.

Fig. 8 is a block diagram showing the structure of wavelength multiplexing optical transmitter of the present invention.

Fig. 9 is a block diagram showing the structure of wavelength multiplexing optical transmitter of the present invention.

Fig. 10 is a block diagram showing the structure of wavelength multiplexing optical transmitter of the present invention.

### (1) Explanation of the structure

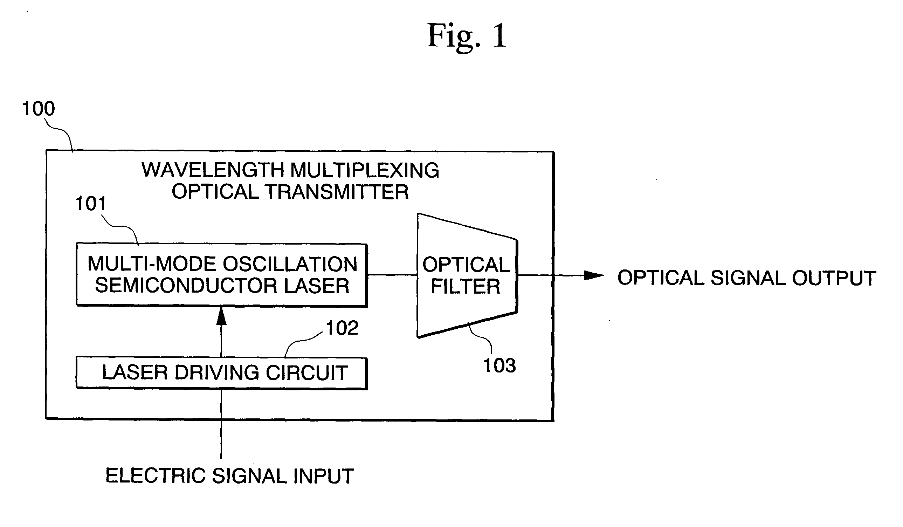

One embodiment of the present invention is described below in detail with reference to Fig. 1. As shown in Fig. 1, a wavelength multiplexing optical transmitter 100 comprises a multiple mode oscillation laser 101, a laser driving circuit 102 for driving the multi-mode oscillation laser 101, and a light filter for filtering the light that is output from the multiple mode oscillation laser 101.

One example of the multiple mode oscillation laser 101 is a Fabry-Perot laser. The Fabry-Perot laser is a semiconductor laser comprising a resonator formed by two reflecting mirrors disposed in parallel to each other at both ends of the active regions along a cleaved surface. Cleaving a semiconductor crystal along a particular cleavage direction forms reflecting mirrors, and when the reflecting mirror formed by the cleaved surface has a reflectance of more than 30%, the resonator obtained by these cleaved reflecting surfaces has a plurality of longitudinal modes which are oscillatable at the wavelength intervals of Δλ = λ²/(2nL), since there is no particular mechanism for selecting a particular wavelength. Here, λ represents a oscillating wavelength, L a length of the resonator, and n is a effective refractive index. Thus, when a high speed direct modulation is executed, a number of longitudinal modes existing at intervals of a few angstroms to a few tens of angstroms will oscillate, which results in spreading the spectrum width. In addition, when the ambient temperature changes, the temperature of the active region of the semiconductor laser changes, which causes a temperature dependent change of the oscillating wavelengths. When an electric field is applied to the active region, a modulated oscillating light can be obtained. However, the thus obtained multiple light wavelengths are simply modulated by the same modulating wave.

This modulation system obtaining the modulated wavelengths of multiple wavelengths by a single modulating wave is quite effective in the case of a broad casting mode to the general public or in the case of a multi-cast mode communication to a plurality of particular people.

Here, an explanation is provided below of the case of two band communication by passing two bands using an optical filter. Passage of two bands makes it possible to execute two-wavelength multiplexing communication, and passage of n wavelength bands enables the execution of n wavelength multiplexing communication. The n wavelength multiplexing communication is capable of exchanging information, which is n times larger than that of the single wavelength communication. An example of an individual device which transmits a plurality of wavelength bands is a waveguide type diffraction grating (AWG: Arrayed Waveguide Grating). It is also possible to form an optical filter capable of transmitting a plurality of bands by combining a plurality of optical filters which transmit a single transmitting region. The transmitting bandwidth is not always required to be variable and a device having a fixed transmitting bandwidth can be used.

When it is necessary to change the transmitting bandwidth, it is possible to provide a device having a variable transmission bandwidth by the addition of a Peltier element to, for example, an optical band pass filter made of SiO₂ type material (such as the above-described AWG) and by controlling the temperature of the filter. Furthermore, in the case of an optical filter using an etalon, the transmitting wavelength region can be changed by addition of mechanisms such as a stepping motor or a piezoelectric element.

### (2) Explanation of operations

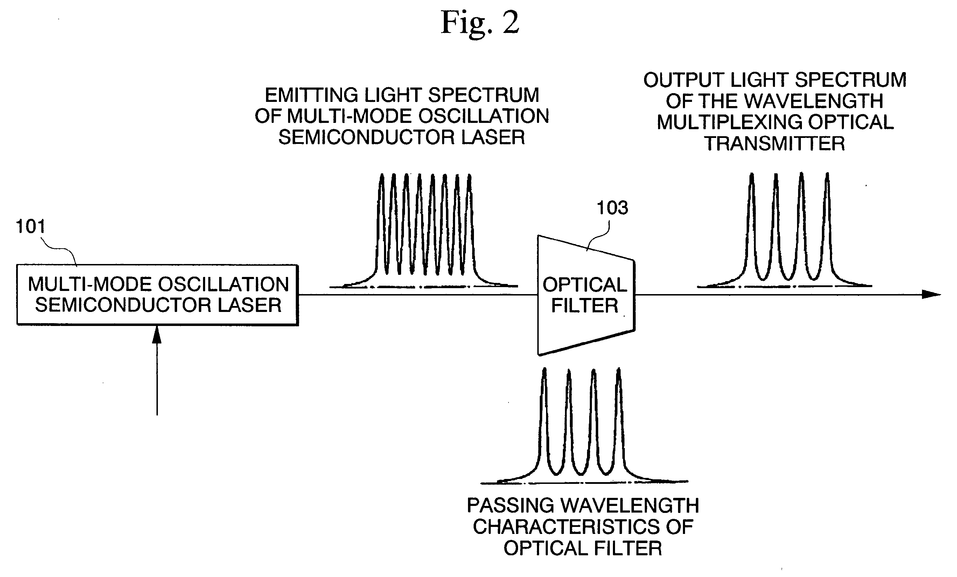

Hereinafter, the operations of the above-described wavelength multiplexing optical transmitter are explained with reference to Figs. 1 and 2.

In Fig. 1, an electric signal in a desired form is input into a wavelength multiplexing optical transmitter 100. The signal is subjected to direct current modulation, after the signal is introduced into the laser driving circuit 102 in the wavelength multiplexing optical transmitter 100. The multi-mode oscillation semiconductor laser 101 outputs an optical signal following the input current input from the laser driving circuit 102. At this time, as shown in Fig. 2, wavelength multiplexing optical signals, determined by the pass wavelength characteristics of the wavelength filter 103, are output from the wavelength multiplexing optical transmitter 100 by filtering the output light beams of the multi-mode oscillation semiconductor laser 101 using an optical filter 103 at the wavelength range thereof. According to Fig. 2, when the wavelength multiplexing optical transmitter 100 outputs light beams having a plurality of wavelengths and when the optical filter 103 only transmits half waves, an output optical spectrum of the wavelength multiplexing output device corresponding to the characteristics of the optical filter 103 is obtained as the output of the optical filter 103.

### Embodiments

### First Embodiment

### (1) Explanation of the structure

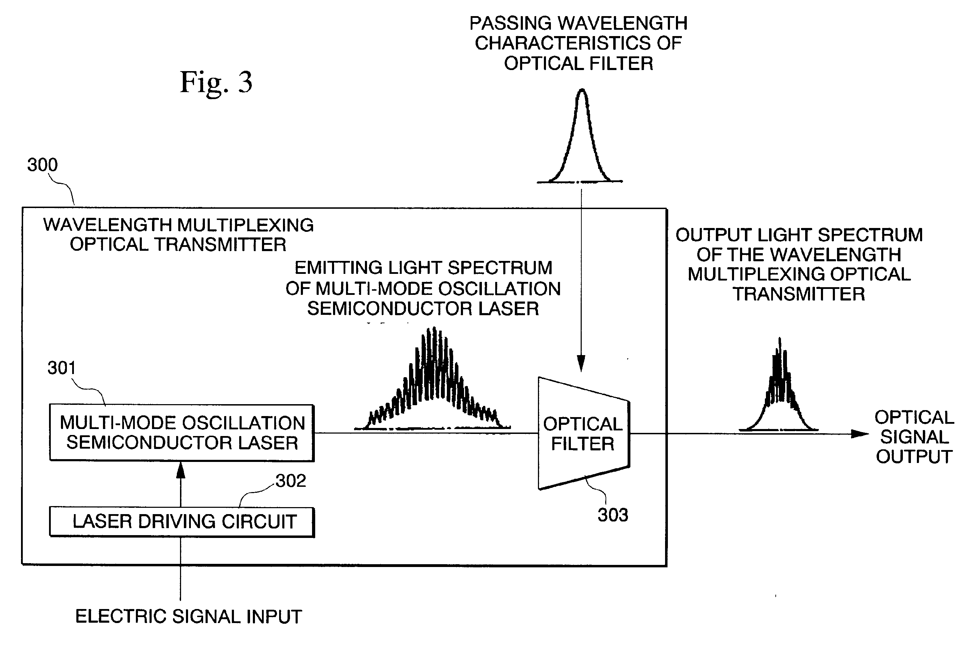

In order to simplify the explanation, an example is described in the case of slicing only a single wavelength by one filter. In Fig. 3, a wavelength multiplexing transmitter 300 comprises a multi-mode oscillation semiconductor laser 301 that emits light beams in a wavelength range around 1550 nm, a laser diode driving circuit 302 for driving this multi-mode oscillation laser 301, and a band pass optical filter 303 having a pass band width of 5 nm for filtering the optical output from the multi-mode oscillation semiconductor laser 301.

### (2) Explanation of the operation

Next, an operation of the wavelength multiplexing optical transmitter 300 is described. First, an electric signal in a desired code form is input into the wavelength multiplexing optical transmitter 300. After being introduced into the laser driving circuit 302 in the wavelength multiplexing optical transmitter 300, this electric signal performs direct current modulation of the multi-mode oscillation semiconductor laser 301. The multi-mode oscillation semiconductor laser 301 outputs the optical laser signals in response to the input current from the laser driving circuit 302. This modulation system can modulate the output light by directly modulating the current injected into the semiconductor laser 301. If the current higher than that of the oscillation threshold of the semiconductor laser is injected, the semiconductor laser emits light, which is represented as the state in which a signal bit is at [I], and, when the current lower than the oscillation threshold of the semiconductor laser is injected, the semiconductor laser does not emit light, which is represented as the state in which the signal bit is at [0]. Demodulation is executed by providing a demodulator at a reception side or by providing an RZ demodulator. When executing an error correction, a modulator for the error correction is provided. For example, when Reed Solomon coding is conducted at the sending side, a Reed Solomon decoder at the reception side carries out decoding.

In the above operation, as shown in Fig. 3, an optical signal is output whose signal carrier wavelength has a 3 dB attenuation band width of 5nm due to filtering the output light of the multi-mode oscillation semiconductor laser 301 using a band pass filter 303 having only one band pass characteristic for passing a 3 dB attenuation band in a width of 5 nm. This embodiment is useful for communication by the broadcast mode.

### Second Embodiment

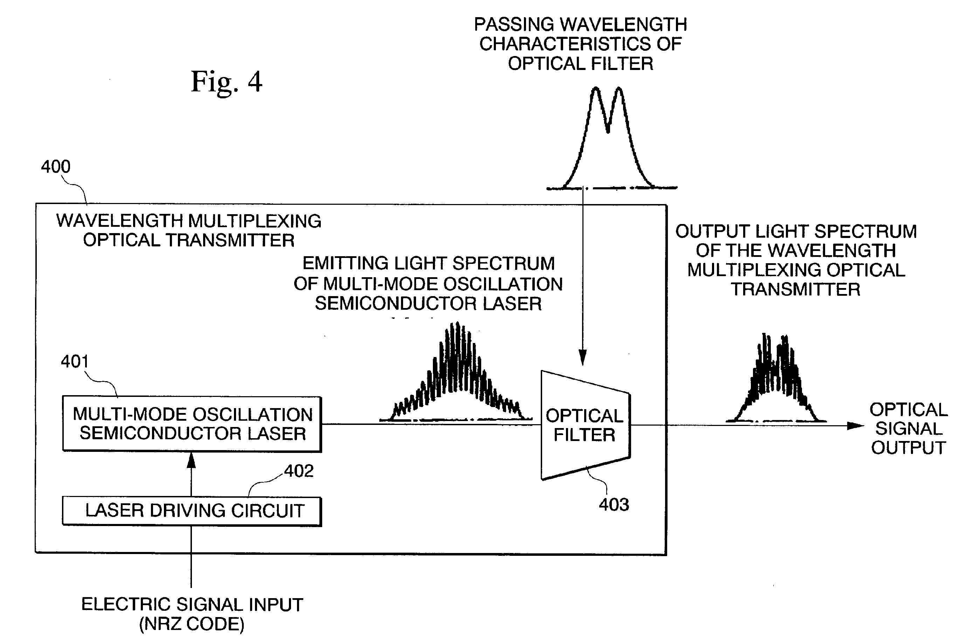

The second embodiment of the present invention is described below. As shown in Fig. 4, an electrical signal in a desired NRZ (Non-Return Zero) code is first input into the wavelength multiplexing optical transmitter 400. After being introduced into the laser driving circuit 402 in the wavelength multiplexing optical transmitter 400, this electrical signal in the NRZ code performs direct current modulation of the multi-mode oscillation semiconductor laser 401. The multi-mode oscillation semiconductor laser 401 outputs the optical signal in response to the current input the laser driving circuit 402. At this time, as shown in Fig. 4, two optical output signals having two different signal carrier wavelengths and having a 3 dB attenuation band width of 5 nm are obtained by filtering the output light of the multi-mode oscillation semiconductor laser 401 using a band pass filter 403 having two different band pass characteristics for passing two of each 3 dB attenuation band in width of 5 nm. This NRZ code is used in the SDH transmission network, and although this NRZ code is not capable of correcting errors, this is effective in communication when two signals are communicated in synchronism with each other.

It is noted that the oscillation wavelength of the multi-mode oscillation semiconductor laser 401 is not limited to the 1550 nm, but the oscillation wavelength laser may be in the 1300 nm band. The 3 dB attenuation band width of the band pass optical filter 403 is not limited to 5 nm and any band widths such as 1 nm or 10 nm can be selected.

### Third Embodiment

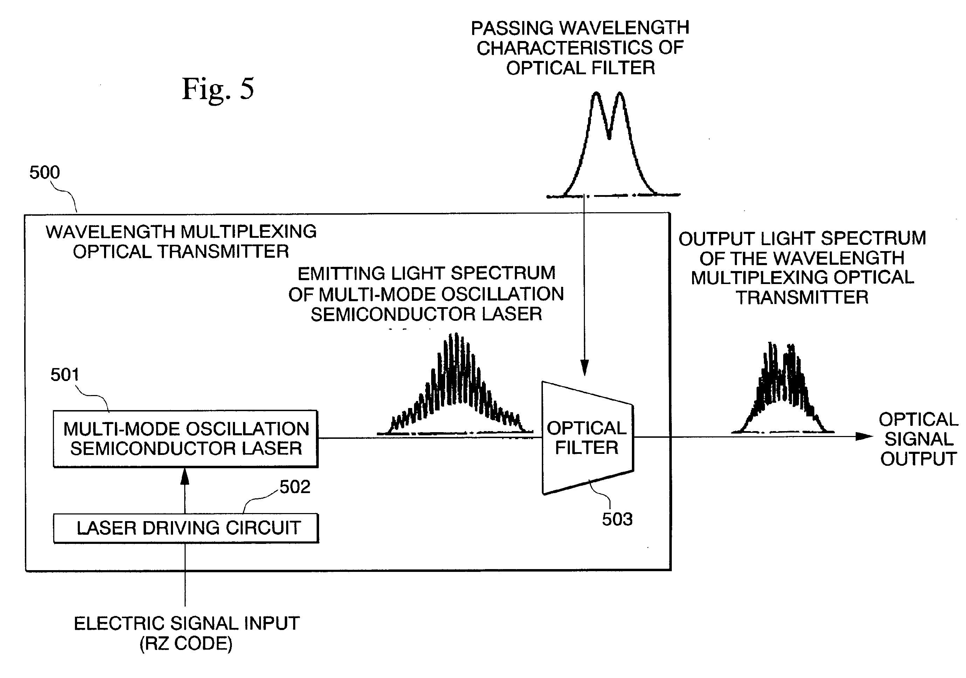

The third embodiment is described below. As shown in Fig. 5, an electric signal in a desired RZ (Return-Zero) code is input into a wavelength multiplexing optical transmitter 500. The electric signal in the RZ code is, after being introduced into the laser driving circuit 502 in the wavelength multiplexing optical transmitter 500, performs a direct current modulation of the multi-mode oscillation semiconductor laser 501. The multi-mode oscillation semiconductor laser 401 outputs optical signals in response to the current input from the laser driving circuit 502.

At this time, as shown in Fig. 5, two optical output signals having two different signal carrier wavelengths and having a 3 dB attenuation band width of 5 nm are obtained by filtering the output light of the multi-mode oscillation semiconductor laser 401 using a band pass filter 403 having two different band pass characteristics for passing two of each 3 dB attenuation band in the width of 5 nm.

Although this RZ code is that used for the signal transmission, similar to the NRZ code, since the frequency band required for RZ is two times wider than that required for NRZ coding, the RZ code is not used for the SDH transmission network. However, in the RZ coding system, because the RZ code is capable of yielding better transmission characteristics than the NRZ code, an application of the RZ code may be increased.

At this time, the oscillating wavelength of the multi-mode oscillation semiconductor laser 501 is not limited to 1550 nm, but the wavelength may be, for example, in a 1300 nm band. In addition, the 3 dB attenuation band width is not limited to 5 nm, but any width can be selected such as 1 nm or 10nm. Furthermore, the number of the passing wavelength bands of the band pass filter 503 is not limited to two, and it is possible to use an optical band pass filter having 16 passing wavelength bands can be used. When using a band pass filter which passes 16 different passing wavelength band characteristics, the wavelength multiplexing optical transmitter 500 outputs an optical output, in which 16 different signal carrier light beams are multiplexed.

### Fourth Embodiment

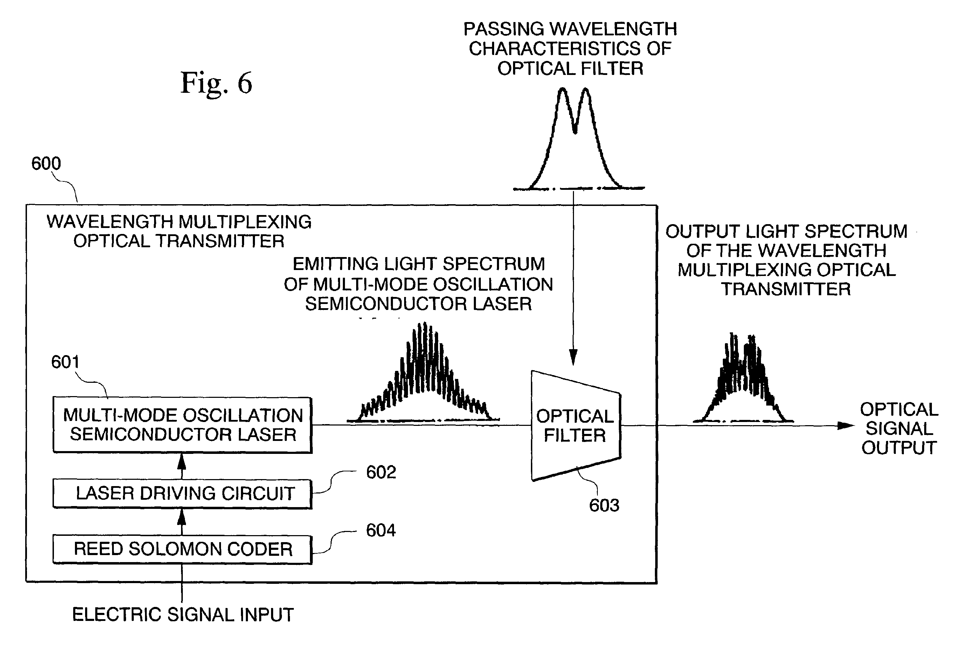

The fourth embodiment is described below. As shown in Fig. 6, an electric signal in a desired code form is input in a wavelength multiplexing optical transmitter 600. This electric signal may be in the NRZ code, RZ code, or any other code forms. This electric signal is, after being coded into the Reed Solomon code by an error correction coding device 604 in the wavelength multiplexing optical transmitter 600. The thus coded electric signal performs a direct current modulation.

The multi-mode oscillation semiconductor laser 601 outputs optical signals in response to the current input from the error correction coding device 604. The coding operation executed in the error correction coding device 604 is not only the above-described coding into the Reed Solomon code, which is called one type of multidimensional cyclic coding, but also includes coding into the error correction codes such as BCH code or Hamming code.

As shown in Fig. 6, two optical output signals having two different signal carrier wavelengths and having a 3 dB attenuation band width of 5 nm are obtained by filtering the output light of the multi-mode oscillation semiconductor laser 401 using a band pass filter 403 having two different band pass characteristics for passing each of two 3 dB attenuation band in the width of 5 nm.

At this time, the oscillating wavelength of the multi-mode oscillation semiconductor laser 601 is not limited to 1550 nm, but the wavelength may be, for example, in a 1300 nm band. In addition, the 3 dB attenuation band width is not limited to 5 nm, but any width can be selected, such as 1 nm or 10nm. Furthermore, the number of the passing wavelength bands of the band pass filter 603 is not limited to two, and an optical band pass filter having 16 passing wavelength bands can be used. When using a band pass filter which passes 16 different passing wavelength band characteristics, the wavelength multiplexing optical transmitter 600 outputs an optical output, in which 16 different signal carrier light beams are multiplexed.

### Fifth Embodiment

In the fifth embodiment, an electric signal in a desired form is input into the wavelength adjusting optical transmitter 700. After introduced into the laser driving circuit 702 in the wavelength adjusting optical transmitter 700, this electric signal in the NRZ code form performs the direct current modulation. The multi-mode oscillation semiconductor laser 701 outputs an optical output in response to the current input from the laser driving circuit 702.

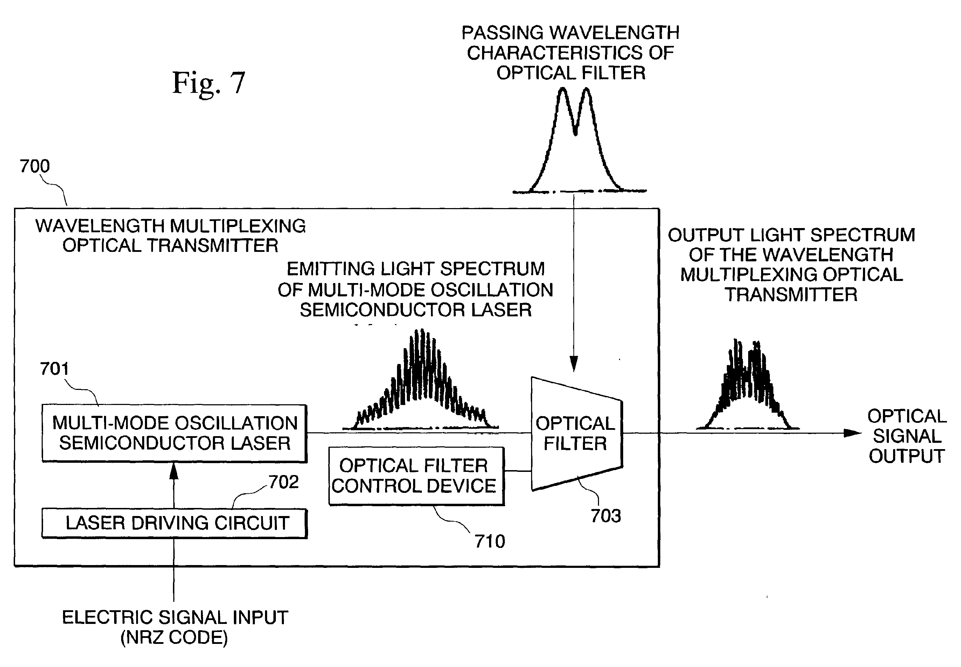

At this time, as shown in Fig. 7, two optical output signals having two different signal carrier wavelengths and having a 3 dB attenuation band width of 5 nm are obtained by filtering the output light of the multi-mode oscillation semiconductor laser 701 using a band pass filter 703 having two different band pass characteristics for passing each of two 3 dB attenuation band in the width of 5 nm. The center wavelength passing the optical band pass filter 703 can be changed and also can be set by applying a predetermined voltage to the wavelength control device 710. The control of the center wavelength is not limited to the above control method, and the center wavelength passing the optical band pass filter can be changed by changing the temperature of the optical band pass filter 703.

The oscillating wavelength of the multi-mode oscillation laser 701 is not limited to 1550 nm, but a 1300 nm band can be used. In addition, the 3 dB attenuation band width is not limited to 5 nm, but 1 nm or 10 nm can be used.

### Sixth Embodiment

In the sixth embodiment, an electric signal in a desired RZ code form is input into the wavelength adjusting optical transmitter 800. After being introduced into the laser driving circuit 802 in the wavelength adjusting optical transmitter 800, the electric signal in the RZ code form performs direct current modulation. The multi-mode oscillation semiconductor laser 801 output an optical output in response to the current input from the laser driving circuit 802.

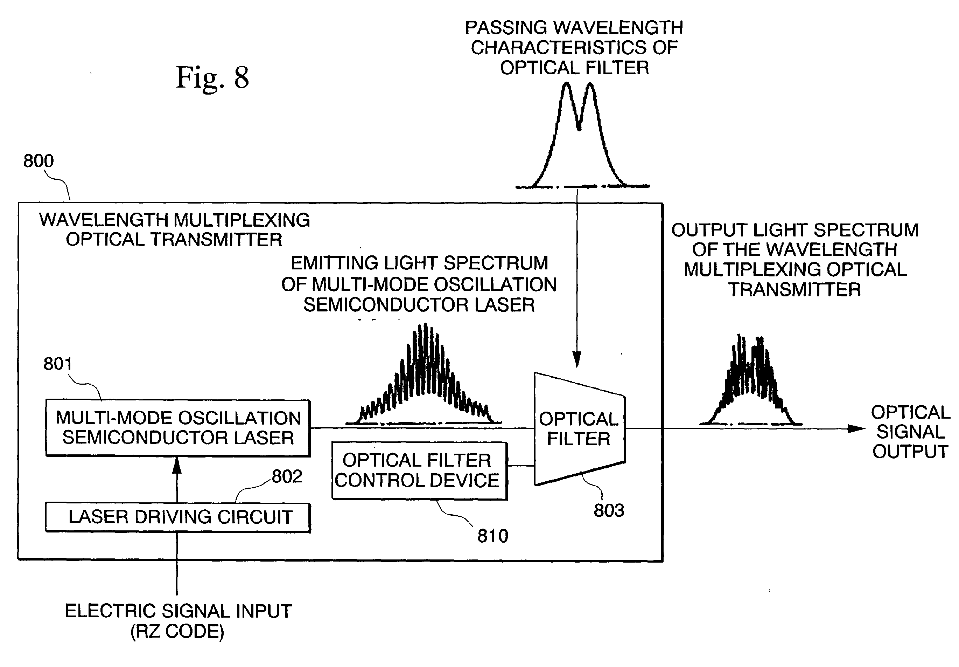

At this time, as shown in Fig. 8, two optical output signals having two different signal carrier wavelengths and having a 3 dB attenuation band width of 5 nm are obtained by filtering the output light of the multi-mode oscillation semiconductor laser 801 using a band pass filter 803 having two different band pass characteristics for passing each of two 3 dB attenuation band in the width of 5 nm. The center wavelength passing the optical band pass filter 803 can be changed and also can be set by applying a predetermined voltage to the wavelength control device 810. The control of the center wavelength is not limited to the above control method, and the center wavelength passing the optical band pass filter can be changed by changing the temperature of the optical band pass filter 803.

At this time, the oscillating wavelength of the multi-mode oscillation semiconductor laser 801 is not limited to 1550 nm, but the wavelength may be, for example, in a 1300 nm band. In addition, the 3 dB attenuation band width is not limited to 5 nm, but any width can be selected such as 1 nm or 10nm. Furthermore, the number of the passing wavelength bands of the band pass filter 803 is not limited to two, and it is possible to use an optical band pass filter having 16 passing wavelength bands. When using a band pass filter that passes 16 different passing wavelength band characteristics, the wavelength multiplexing optical transmitter 800 outputs an optical output, in which 16 different signal carrier light beams are multiplexed.

### Seventh Embodiment

In the sixth embodiment, an electric signal in a desired RZ code form is input into the wavelength adjusting optical transmitter 900. After being introduced into the laser driving circuit 902 in the wavelength adjusting optical transmitter 800, the electric signal in the RZ code form performs the direct current modulation. The multi-mode oscillation semiconductor laser 901 output an optical output in response to the current input from the laser driving circuit 902.

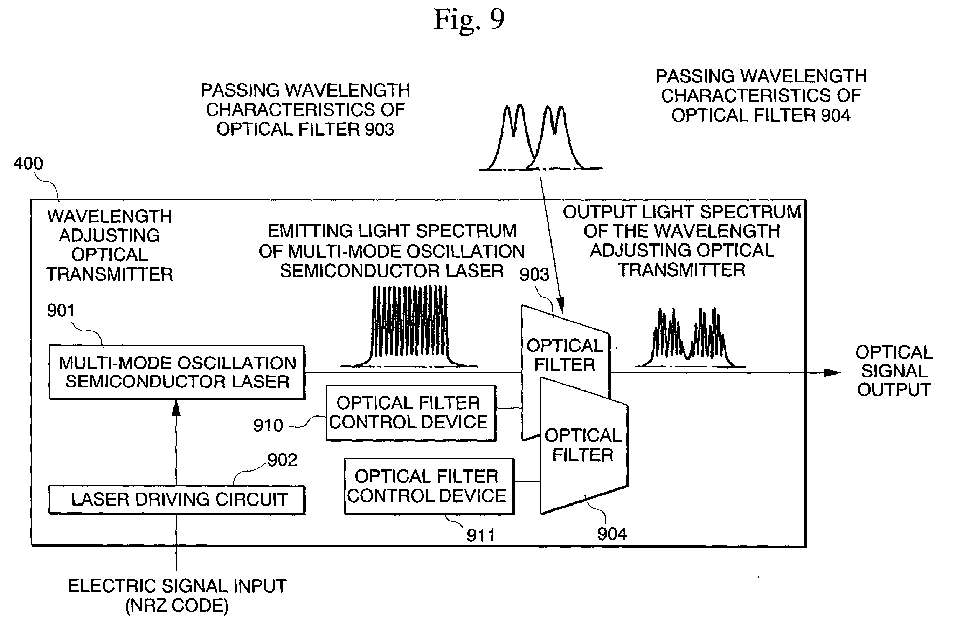

At this time, as shown in Fig. 9, four optical output signals having four different signal carrier wavelengths and each having a 3 dB attenuation band width of 5 nm are obtained by filtering the output light of the multi-mode oscillation semiconductor laser 801 using a band pass filters 903 and 904 each having two different band pass characteristics for passing two of each 3 dB attenuation band in the width of 5 nm. The center wavelengths passing the optical band pass filters 903 and 904 can be changed and also can be set by applying a predetermined voltage to the wavelength control devices 910 and 911. The control of the center wavelength is not limited to the above control method, and the center wavelength passing the optical band pass filters can be changed by changing the temperature of the optical band pass filters 903 and 904.

At this time, the oscillating wavelength of the multi-mode oscillation semiconductor laser 901 is not limited to 1550 nm, but the wavelength may be, for example, in a 1300 nm band. In addition, the 3 dB attenuation band width is not limited to 5 nm, but any width can be selected, such as 1 nm or 10nm. Furthermore, the number of the passing wavelength bands of each band pass filters 903 and 904 is not limited to two, and an optical band pass filter having 16 passing wavelength bands can be used. When using a band pass filter that passes 16 different passing wavelength band characteristics, the wavelength multiplexing optical transmitter 900 outputs an optical output, in which 32 different signal carrier light beams are multiplexed.

In addition, two band pass filters are provided as shown in Fig. 9, but the number of band pass filters are not limited.

### Eighth Embodiment

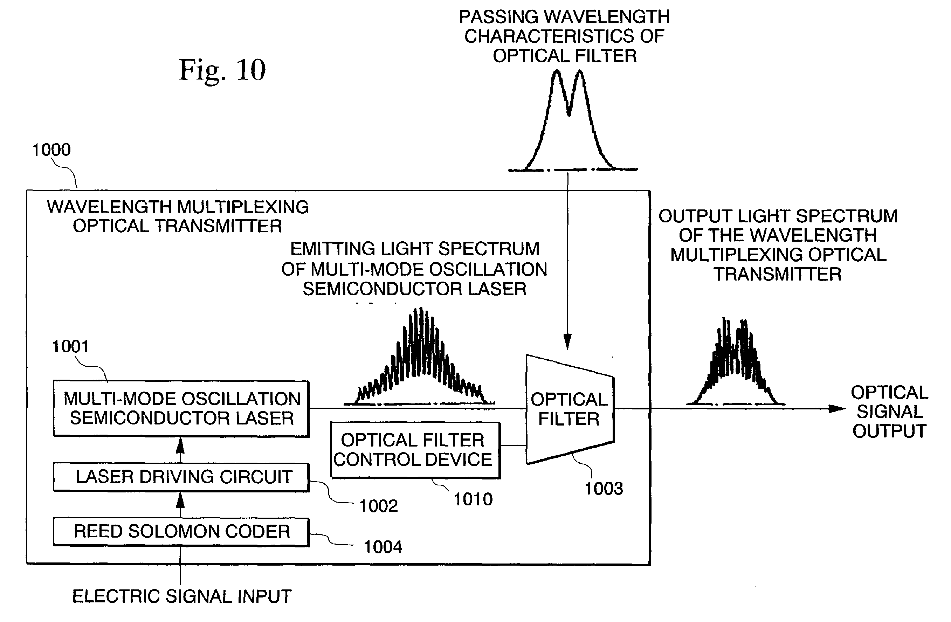

In the eighth embodiment, as shown in Fig. 10, a electric signal in a desired code form is input in a wavelength multiplexing optical transmitter 1000. This electric signal may be in any code forms such as the NRZ code, the RZ code, or other code. After being coded into the Reed Solomon code by an error correction coding device 1004 in the wavelength multiplexing optical transmitter 1000, this electric signal is introduced into the laser driving circuit 1002. A direct current modulation of the multi-mode oscillation semiconductor laser 1001 is carried out by the thus coded electric signal. The multi-mode oscillation semiconductor laser 1001 outputs optical signals in response to the current input from the error correction coding device 1004.

At this time, the coding operation executed in the error correction coding device 1004 is not only the above-described coding into the Reed Solomon code, but also includes coding into the error correction codes such as BCH code or another code. As shown in Fig. 8, two optical output signals having two different signal carrier wavelengths and having a 3 dB attenuation band width of 5 nm are obtained by filtering the output light of the multi-mode oscillation semiconductor laser 1001 using a band pass filter 1003 having two different band pass characteristics for passing two of each 3 dB attenuation band in the width of 5 nm. The wavelength control device 1010 controls the center wavelength passing the optical band pass filter 1003. The control of the center wavelength is not limited to the above control method, and the center wavelength passing the optical band pass filter can be changed by changing the temperature of the optical band pass filter 1003.

At this time, the oscillating wavelength of the multi-mode oscillation semiconductor laser 1001 is not limited to 1550 nm, but the wavelength may be, for example, in the 1300 nm band. In addition, the 3 dB attenuation band width of the band pass optical filter 1003 is not limited to 5 nm, but any width can be selected, such as 1 nm or 10nm. Furthermore, the number of the passing wavelength bands of the band pass filter 1003 is not limited to two, and an optical band pass filter having 16 passing wavelength bands can be used. When using a band pass filter that passes 16 different passing wavelength band characteristics, the wavelength multiplexing optical transmitter 1000 outputs an optical output, in which 16 different signal carrier light beams are multiplexed.

## Claims

1. A wavelength multiplexing method for use in an optical network that adopts a wavelength multiplexing system comprising the steps of:
driving a semiconductor laser by direct current modulation in response to an input electric signal; and
obtaining at least one signal carrier wavelength by dividing output wavelengths of the multi-mode oscillation semiconductor laser using an optical filter which passes at least one wavelength in said output wavelengths of said semiconductor laser.

2. A wavelength multiplexing method according to claim 1, wherein said wavelength multiplexing method has a function of outputting an optical signal by converting an electric signal introduced into a driving circuit, which is provided for carrying out direct current modulation of said multi-mode oscillation semiconductor laser.

3. A wavelength multiplexing optical transmitter comprising:
a multi-mode oscillation semiconductor laser;
a laser driving circuit for driving said semiconductor laser by an input electric signal; and
an optical filter having at least one passing band in an optical output from said multi-mode oscillation semiconductor laser; wherein at least one or more than one signal carrier wavelength is obtained by filtering the output of said semiconductor laser for slicing the output wavelength region of said semiconductor laser.

4. A wavelength multiplexing optical transmitter according to claim 3, wherein said transmitter has a function of outputting an optical signal by converting the introduced electric signal after the electric signal is subjected to a forward error correction by a forward error correction circuit disposed in front of said laser driving circuit.

5. A wavelength multiplexing optical transmitter according to claim 3 or 4, wherein said transmitter outputs an NRZ coded wavelength multiplexing optical signal by use of an NRZ coded electrical signal as the input electric signal

6. A wavelength multiplexing optical transmitter according to claim 3 or 4, wherein said transmitter outputs an RZ coded wavelength multiplexing optical signal by use of an RZ coded electrical signal as the input electric signal.

7. A wavelength adjusting apparatus using a wavelength multiplexing optical transmitter according to claim 3, 4, 5 or 6, wherein the signal carrier wavelength is changed by changing the transmitting wavelength region of said optical filter.

8. A wavelength adjusting apparatus according to claim 7, wherein said wavelength adjusting apparatus further comprises a laser driving circuit for directly modulating said multi-mode oscillation semiconductor by an electric current and said driving circuit converts the electric signal introduced in said driving circuit into optical signals having more than one signal carrier wavelength, and wherein said driving circuit changes said signal carrier wavelength by changing the transmitting wavelength region of said optical filter.

9. A wavelength adjusting apparatus according to claim 8, wherein said wavelength adjusting apparatus further comprises a forward error correction circuit for applying a correction code to the electric signal introduced into said laser driving circuit, wherein said wavelength adjusting apparatus outputs an optical signal by driving said semiconductor laser after the introduced electric signal is subjected to a forward error correction by said forward error correction circuit.

10. A wavelength adjusting apparatus according to claim 8 or 9, wherein said wavelength adjusting apparatus outputs an NRZ coded adjustable wavelength optical signal by introducing the NRZ coded electric signal to said laser driving circuit.

11. A wavelength adjusting apparatus according to claim 8 or 9, wherein said wavelength adjusting apparatus outputs an RZ coded adjustable wavelength optical signal by introducing the RZ coded electric signal to said laser driving circuit.
